(19) Europäisches Patentamt
European Patent Office
Office européen des brevets

(11) Publication number: **0 239 234 B1**

# (12) EUROPEAN PATENT SPECIFICATION

(45) Date of publication of patent specification: **05.02.92 Bulletin 92/06**

(51) Int. Cl.$^5$: **B01D 53/04,** C01B 23/00

(21) Application number: **87301512.7**

(22) Date of filing: **20.02.87**

## (54) Separation of a multicomponent gas mixture.

(30) Priority: **24.02.86 US 832280**

(43) Date of publication of application: **30.09.87 Bulletin 87/40**

(45) Publication of the grant of the patent: **05.02.92 Bulletin 92/06**

(84) Designated Contracting States: **BE DE FR GB IT NL**

(56) References cited:
**US-A- 3 788 036**
**US-A- 4 263 018**
**US-A- 4 340 398**

(73) Proprietor: **The BOC Group, Inc.**
**85 Chestnut Ridge Road**
**Montvale, New Jersey 07645 (US)**

(72) Inventor: **Krishnamurthy, Ramachandran**
**A-11 Devonshire Drive**
**Cranbury, NJ 08512 (US)**
Inventor: **Lerner, Steven L.**
**41 Holly Glen Lane South**
**Berkeley Heights, NJ 07922 (US)**
Inventor: **MacLean, Donald L.**
**RD2 Box 102**
**Annandale, NJ 08801 (US)**

(74) Representative: **Wickham, Michael et al**
**c/o Patent and Trademark Department The BOC Group plc Chertsey Road**
**Windlesham Surrey GU20 6HJ (GB)**

EP 0 239 234 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a process for separating a multicomponent gas mixture.

Pressure swing adsorption (PSA) is commonly used to separate a multicomponent feed gas into two streams: a primary product at high pressure, rich in one or more mildly adsorbed components and a low pressure secondary product, rich in one or more strongly adsorbed components. Any intermediate components that are moderately adsorbed are split between the two products.

The operating sequence for a conventional 2-bed PSA process typically consists of bed pressurization, product release, and regeneration stages. In the prior art it is common to also include in the operating sequence, a bed pressure equalization step, in order to reduce the Pressure from which the bed to be regenerated is vented.

For a given bed design, sieve capacity and operating pressure, the time periods for each of the steps of the operating sequence mentioned above are normally chosen so that when the concentration of the strongly adsorbed component reaches a specified limit in the primary product, the product release step is halted and the bed is regenerated. For a system operating under these conditions, a major loss of weakly adsorbed components occurs due to their presence in the gas located in the bed void space or weakly bound to the adsorbent which is vented during the regeneration stage. The higher the operating pressure, the greater is this loss.

U.S.-A-4,340,398 (Doshi et al) discloses a process for a PSA system containing three or more beds wherein void gas is transferred to a tank prior to bed regeneration, thereby reducing the pressure from which the bed vents, and later using this gas for repressurization. The primary purpose of Doshi et al.'s invention is to separate the product backfill step and bed equalization step, in order to obtain a more uniform product with no discontinuity. The separation of the two steps is achieved through a storage vessel which primarily serves as a buffer tank for backfill gas. Doshi et al. suggest equalization of the bed to the tank simultaneously with the product backfill into the tank. Consequently, only a small portion of the void gas can be drawn into the tank and, hence, the advantage of tank equalization in the present invention is not fully realized by Doshi et al.

Void gas loss can be minimized by reducing the pressure from which the bed vents. A process modification to the 2-bed PSA, incorporating tank equalization has been proposed in the literature. (See, e.g. Lee, H. and Stahl, D.E., "Pressure Equalization and Purging System for Heatless Adsorption Systems", U.S-A-3,788,036, issued on January 29, 1974; Marsh, W.D., Holce, R.C., Pramuk, F.S. and Skarstrom, C.W., "Pressure Equalization Depressuring in Heatles Adsorption", U.S.-A-3,142,547, issued on July 28, 1964). The modification proposed in both patents, which has been recommended for zeolite PSA systems producing either oxygen from air or hydrogen from a hydrogen/hydrocarbon mixture, consists of equalizing the bed with a tank after bed equalization in order to transfer part of the bed void gas, and subsequently using the conserved gas as purge gas to aid regeneration of the bed. The tank gas, obtained from the bed void space, contains less of the desired (mildly adsorbed) component than the product gas. Consequently, for a process using product purge for regeneration, the tank modification reduces the product purge requirement and improves yield. In the single bed PSA embodiment suggested in U.S-A-3,788,036, two tanks are used; the first equalization tank is used to conserve void gas for repressurization while the void gas conserved by a second equalization tank is used as a purge. The first equalization tank in this case fulfills the function of the bed pressure equalization in the 2-bed process. The process suggested with 2-beds includes only one tank which conserves void gas for use as purge.

Void gas conserved by pressure equalization with a tank can be used either as a purge gas or for repressurization. In order to improve the yield of the mildly adsorbed components in the primary products by repressurization, conserved void gas for repressurization can only contain strongly adsorbed components in concentrations slightly above that in the primary product itself. If the strongly adsorbed component is present in concentrations much higher than the product specification, the conserved void gas can at best be used as purge gas and the improved yield of the weakly adsorbed component is modest. Even when used as a purge gas, the conserved void gas can only contain strongly adsorbed components in concentrations lower than their corresponding feed concentration. At the end of the production cycle, the void gas is very rich in the mildly adsorbed components and the concentration of strongly adsorbed components is very small and close to that in the primary product. Hence it is important to save this gas for repressurization. The bed pressure equalization in a 2-bed process is included for this purpose. At the end of bed pressure equalization, the pressure in the bed that has just been produced is lower and the concentration of the strongly adsorbed component starts to build up in the bed void gas due to desorption as the equilibrium changes with lower pressure. Therefore, when only strongly or mildly adsorbed components are present, tank equalization following bed pressure equalization to conserve void gas can only be used to provide purge gas for bed regeneration. Mildly adsorbed components in the void gas are lost in the purge gas. The above analysis applies to systems which contain mildly adsorbed or strongly adsorbed components. This is the case in the separations described in US-A-3,788,036 (oxygen from nitrogen) and in U.S-A-3,142,547 (hydrogen from hydrocarbons).

US-A-4 263 018 relates to a PSA process and system including at least two adsorption beds and a segregated storage adsorption bed which is isolated from direct communication with the feed gas stream. During the process the pressures in the adsorption beds are equalised only from the feed ends thereof at the end of adsorption in one of the beds and after pressurisation of the other bed. During each such pressure equalisation step the repressurising bed receives feed gas. The segregated storage adsorption bed is pressure equalised with a depressurising adsorption bed and then after purging of the bed the segregated storage adsorption bed is equalised with that adsorption bed during repressurisation thereof.

The present invention is particularly concerned with separations involving multicomponent gas mixtures which contain moderately adsorbed component(s) apart from strongly adsorbed and mildly adsorbed components. Downstream processing requires that the primary product contain less than a specified concentration of the strongly adsorbed components. The moderately adsorbed components(S) can, however, be tolerated either in the primary product or in the secondary product over a range of concentrations.

It is an aim of the invention to provide a PSA process which facilitates the recovery of a primary gas product containing an enhanced yield of the mildly adsorbed component.

According to the present invention there is provided a cyclical process for the separation of a multicomponent gaseous mixture comprising a strongly adsorbed component, a moderately adsorbed component and a mildly adsorbed component, using an apparatus for separating the gas mixture by pressure swing adsorption including first and second adsorbent beds, each having a feed gas end and opposed primary product gas end, and at least one tank able to be placed in communication with both beds separately, the process comprising in sequence:

(i) placing the first bed in communication with the second bed so as to equalise the pressures therein;
(ii) placing the first bed in communication through its primary product end with said tank so as to equalise the pressures therein;
(iii) regenerating said at least first adsorption bed;
(iv) placing said first adsorption bed in communication again with said tank so as to equalise the pressures therein and to return gas to said first bed;
(v) placing said first bed in communication with said second bed so as to equalise the pressures therein;
(vi) placing said second adsorption bed in communication through its primary product end with said tank so as to equalise the pressures therein;
(vii) regenerating said second adsorption bed;
(viii) placing said second adsorption bed in communication with said tank and equalising the pressures therein and returning gas from the tank to the second bed;

in which sequence while one bed is being equalised in pressure with said at least one tank or is being regenerated, the other bed is being pressurised with feed gas mixture, during which step primary product gas stream, rich in the mildly adsorbed component and also containing the moderately adsorbed component is produced at relatively high pressure, and in which sequence a secondary product gas stream, rich in the strongly adsorbed component and also containing the moderately adsorbed component, is produced during the regeneration steps at relatively low pressure, wherein each step of pressure equalisation between the first and second beds is performed by placing them in communication at both their feed gas and their primary product gas ends, the beds being isolated from the feed gas and the product gas throughout each such pressure equalisation.

The void gas (at the end of the production cycle) is rich in mildly adsorbed components and contains small to moderate amounts of moderately adsorbed components and low concentrations, at or below product specification, of strongly adsorbed components. Following bed pressure balancing, the moderately adsorbed components readily desorb and strongly adsorbed components are still in the adsorbed phase. The void gas in now rich in the moderately adsorbed component with significant amounts of the mildly adsorbed component. This gas is conserved by tank equalisation and still meets the requirement for use as repressurisation gas to improve yield. The tank equalisations can be continued until the strongly adsorbed components start to desorb and their concentration level in the void gas becomes appreciable. The moderately adsorbed component(s) thus provide a buffer range over which tank equalisations are effective for producing repressurisation gas. The yield of the mildly adsorbed component is improved appreciably through the tank equalisations with a concurrent change in the ratio in which the moderately adsorbed components(s) distributes in the primary and secondary products.

The process according to the invention is particularly effective when one or more of the following conditions are met:

(i) The feed gas is at very high pressure and the PSA operation is carried out at pressures higher than the optimum PSA operative pressure for the purpose of conserving pressure energy in the primary product for downstream processing. In this case, the tank equalisation provides a mechanism by which the desorbing pressure can be maintained at optimum level irrespective of the adsorption pressure, thereby reducing the loss of mildly adsorbed (desired) component during venting.

(ii) Desired product is very valuable and hence purge containing even small amounts of this gas is not recommended. Vacuum regeneration will then be favoured in spite of high associated costs.

(iii) Purge gas is available from an external source and so the conserved void gas can be used for repressurization in its entirety.

An example of a multicomponent gas system to which the present invention has application is a high pressure (13.2 MPa) (1900 psig) gas mixture, originating from an ammonia purge gas, comprising an appreciable amount of nitrogen, along with argon, hydrogen, and methane. The nitrogen is a moderately adsorbed compound which can distribute between an argon and hydrogen rich primary product stream and a methane rich secondary product stream.

The objective of the PSA separation in this example is to essentially remove methane completely (down to a given specification, for example, 1 ppm) and as much nitrogen as possible. The PSA product containing hydrogen, argon and nitrogen is then cryogenically distilled to produce pure liquid argon.

Methane must be completely removed because any methane in the PSA primary product will concentrate in the pure argon product. Nitrogen, however, can be tolerated over a wide range; argon can be separated as a pure product from a mixture with hydrogen and nitrogen over a wide range of nitrogen concentrations in a single column. Incremental amounts of nitrogen have little effect on the column separation costs and hence in the PSA separation, since minimizing the amount of nitrogen in the primary product is secondary to maximizing argon yield.

In the PSA separation, the nitrogen is desorbed before the methane as the pressure is reduced, and the bed pressure reduction, via tank equalization, can be continued over a range of pressures before methane desorption starts. Nitrogen therefore acts as a buffer component in this particular application of the present invention.

It is also important to note that the feed stream is available at a very high pressure in this case. The PSA must be operated at a high pressure to eliminate recompression for downstream separation. The tank equalizations provide a mechanism to operate the PSA at a desired high pressure to get primary product at this pressure whereas the pressure is decreased to a very low level before initiating bed venting to obtain a high argon yield.

The invention will be more clearly understood by reference to the following description of exemplary embodiments thereof in conjunction with the following drawings in which:

FIG. 1 is a schematic flow diagram of an improved pressure swing adsorption system according to the present invention, comprising a single tank for equalization;

FIG. 2 is a schematic flow diagram of an improved pressure swing adsorption system according to the present invention, comprising two tanks for equalization;

FIG. 3 is a schematic flow diagram of a prior art pressure swing adsorption system;

FIG. 4 is a chart diagram showing the prior art timing and valve position during a cycle sequence, when practicing the prior art system illustrated in FIG. 3 and Example 1 below;

FIG. 5 is a chart diagram showing the present invention timing and valve positions during a cycle sequence, when practicing the system illustrated in FIG. 1 and Example 2 below;

FIG. 6 is a chart diagram showing the present invention timing and valve positions during a cycle sequence, when practicing the system illustrated in FIG. 2 and Example 4 below;

FIG. 7 is a graph showing the increase in argon yield compared to the prior art in relation to the ratio of tank volume to bed void volume according to a process employing a single tank embodiment of the present invention. The primary product is obtained at 1.1 MPa (150 psig) pressure.

FIG. 8 is a graph showing the increase in argon yield compared to prior art in relation to the ratio of tank volume to bed void volume according to a process employing a two tank embodiment of the present invention. The primary product is obtained 1.1 MPa (150 psig) pressure.

FIG. 9 is a graph showing the increase in argon yield compared to prior art in relation to the ratio of tank volume to bed void volume according to a process employing a single tank embodiment of the present invention. The primary product is obtained at 2.85 MPa (400 psig) as opposed to 1.1 MPa (150 psig) in FIG. 7 and hence this illustrates the utility of tank equalizations for conserving available feed pressure energy.

The present invention improves product yield in multi-component bulk separations. Inclusion of at least one tank to the conventional 2-bed PSA process improves the yield of mildly adsorbed components by reducing the bed void gas loss.

Referring to FIG. 1, the feed gas stream 18 containing a multicomponent mixture of gases enters the 2-bed system, during which valves 1 and 14 are opened, and the other valves are closed. Bed A is thereby pressured by the feed gas to a preselected pressure. Meanwhile, the pressure in Bed B is equalized with tank 15 via valve 14. Following equalization with the tank, Bed B is vented to the atmosphere by closing valve 14 and opening

valves 6 and 11.

Upon reaching a preselected pressure in Bed A, the primary product is released from Bed A by opening valve 9 thereby yielding a product stream 21 rich in mildly adsorbed components. Meanwhile, Bed B is exposed to vacuum regeneration by closing valve 11 and opening valve 12. Following vacuum regeneration of Bed B, and while product release continues in Bed A, equalization of the pressure in Bed B with tank 15 occurs by closing valves 12 and 6 and opening valve 14. Thus, the high pressure void gas that had been sent to the equalization tank prior to regeneration is recovered for further treatment. Following the second equalization of Bed B, the Bed A and Bed B are equalized by closing valves 1, 9, and 14 and opening valve 3, 4, 7 and 8. Located betwixt valves 3 and 4 and betwixt valves 7 and 8 are needle valves 19 and 20, respectively set to obtain a suitable gas flow rate.

The previous steps of the cycle are analogously repeated, except that Bed A and Bed B are reversed with respect to feed pressurization and regeneration. Following bed balance, valves 3, 4, 7, and 8 are closed and valves 2 and 13 are opened. This configuration permits equalization of Bed B with tank 15 and feed pressurization of Bed B. By closing valve 13 and opening valves 5 and 11, Bed A is vented, while Bed B continues to pressurize via valve 2. The pressurized Bed B is then permitted product release by opening valve 10. Meanwhile Bed A undergoes vacuum regeneration by closing valve 11 to the atmosphere, and opening valve 12 to vacuum. Next, following regeneration of Bed A, equalization with tank 15 is achieved by closing valves 5 and 12 and opening valve 13. Thus, the high pressure void gas is returned to Bed A. Finally, following equalization of Bed A and the completion of product release, the Bed A and Bed B are balanced by closing valves 2 and 10, thereby stopping gas flow through Bed A, and closing valve 13 leading to the tank, while opening valves 3, 4, 7, and 8, thereby permitting gas flow between the beds.

Referring now to FIG. 2, the feed gas stream 18, containing a multicomponent mixture of gases, enters the 2-bed pressure swing adsorption system. Valves 1 and 14 are opened, whereas the other valves are closed. The first Bed A is thereby pressurized by the feed gas to a preselected pressure. Meanwhile, the pressure in Bed B is equalized with a first tank 1 via valve 14. Following equalization with tank 1, valve 14 is closed as valve 16 is opened to accomplish equalization with a second tank 2, while first bed A continues to be pressurized with feed gas stream 18. Following this second tank equalization, the second bed B is vented to the atmosphere by closing valve 16 and opening valves 6 and 11.

Upon reaching a preselected pressure in first bed A, the primary product is released from first bed A, by opening valve 9, in addition to already opened valve 1, thereby yielding a product stream 19 rich in mildly adsorbed components. Meanwhile, second bed B is exposed to vacuum regeneration by closing valve 11 and opening valve 12, thereby accomplishing communication of the second bed B with a source of vacuum. Following vacuum regeneration of second bed B, and while product release continues in bed A, a second equalization of the pressure in second bed B occurs by closing valves 6 and 12 and opening valve 16. Thus, the void gas that has been sent to the second stage equalization tank prior to regeneration is recovered for further treatment. Next, the valve 16 is closed and valve 14 is opened to accomplish another second stage equalization with the tank 1. Following the second stage equalization of Bed B, to accomplish recovery of the void gas, the first bed A and second bed B are pressure equalized by closing valve 1, 9, and 14, and opening valves 3, 4, 7 and 8. Located betwixt valves 3 and 4 and betwixt valves 7 and 8 are needle valves 21 and 17, respectively, set to obtain a suitable gas flow rate.

The previous steps of the cycle are analogously repeated, except that first bed A and second bed B are reversed with respect to feed pressurization product release, and regeneration steps as now described. Following bed balance, valves 3, 4, 7, and 8 are closed and valves 2 and 13 are opened. This configuration permits equalization of bed A with tank 1 and feed pressurization of second bed B. By closing valve 13 and opening valve 15, the first bed A is equalized with tank 2. Next, by closing valve 15 and opening valves 5 and 11, first bed A is vented, while second bed B continues to be pressurized via valve 2. The pressurized bed B is then permitted product release by opening valve 10. Meanwhile, Bed A undergoes vacuum regeneration by closing valve 11 to the atmosphere, and opening valve 12 to vacuum. Next, following regeneration of first bed A, a second stage equalization of the first bed A with tank 2 is achieved by closing valves 5 and 12 and opening valve 15, thereby recovering void gas.

Another second stage equalization, this time with tank 1, is accomplished by closing valve 15 and opening valve 13. Finally, following the completion of the tank equalization of first Bed A and the completion of product release by second Bed B, the beds are balanced by closing valves 2, 10, and 13, and opening valves 3, 4, 7, and 8, thereby permitting gas flow between the beds.

Although having general applicability, the invention is illustrated in a process to recover argon from ammonia synthesis plant purge gas. The objective of PSA, in this case, is to separate argon as a primary high pressure product from a feed available at 1900 psig and consisting of four components having the following typical composition: 9% $H_2$, 12% Ar, 54% $N_2$ and 25% $CH_4$. Hydrogen is more weakly adsorbed than argon

and will separate with argon in the primary product. In contrast, methane is strongly adsorbed and is the major component in the low pressure secondary product. Nitrogen is moderately adsorbed and will distribute between the two products. For an efficient operation of the process, the variables are adjusted so that methane concentration in the primary product is below a given specification and the argon yield in the primary product is maximized. Although the nitrogen in the primary product is to be minimized, this is of secondary importance compared to maximizing argon yield.

COMPARATIVE EXAMPLE 1

A conventional 2-bed PSA process was employed for effecting the separation of a gaseous mixture comprising hydrogen, argon, nitrogen, and methane. A flow diagram of a conventional 2-bed PSA is shown in FIG. 3. Each of the two PSA beds were approximately 650 cc in volume and contained 5A medical grade zeolite molecular sieve adsorbent material (commercially obtained from Union Carbide). The primary product was withdrawn at 1.1 MPa (150 psig) pressure and the regeneration was carried out at a vaccum of 10 kPa (1.5 psia). A 5 minute full cycle was employed according to the following cycle sequence:

| Step | Bed A | Bed B |
|---|---|---|
| 1 | -----------Bed Pressure Equalization--------- | |
| 2 | Pressurization and Product release | Vent to atmospheric Pressure |
| 3 | Constant feed and Product release | Vacuum regeneration |
| 4 | -----------Bed Pressure Equalization--------- | |
| 5 | Vent to atmospheric pressure | Pressurization and product release |
| 6 | Vacuum regeneration | Constant feed and product release |

The timing and valve positions are shown in FIG. 4. The primary product flow was maintained at approximately 27.2% of feed flow (for both flows averaged over a cycle). For a given cycle of PSA operation, this condition was determined to be the optimum for maximizing argon yield while meeting methane product specification. At steady state, the product composition was 31.5% $H_2$, 29.5% Ar and 39.0% $N_2$. The argon yield was 68 percent corresponding to an allowable product methane concentration up to the detection limit of a thermal conductivity analyzer (less than 20 ppm).

EXAMPLE 2

A system according to the present invention (FIG. 1) was compared to the conventional system of Comparative Example 1 above. The same gaseous mixture and PSA beds were employed. The PSA operating pressure was at 1.1 MPa (150 psig) and the regenaration pressure was at a vacuum of 10 kPa (1.5 psia). Inclusion of a 300 ml tank (the ratio of tank volume to bed void volume was approximately one) with the normal 2-bed PSA system was operated in according with the following 5 minute cycle sequence:

| Step | Bed A | Bed B |
|---|---|---|
| 1 | -----------Bed Pressure Equalization--------- | |
| 2 | Pressurize | Equalize with tank |
| 3 | Pressurize and product release | Vent to atmosphere |
| 4 | Constant feed and Product release | Vacuum regeneration |
| 5 | Constant feed and Product release | Equalize with tank |
| 6 | -----------Bed Pressure Equalization--------- | |
| 7 | Equalize with tank | Pressurize |
| 8 | Vent to atmosphere | Pressurize and product release |
| 9 | Vacuum regeneration | Constant feed and product release |
| 10 | Equalize with tank | Constant feed and product release |

The timing and valve positions are shown in FIG. 5. The product to feed flow ratio was optimized for maximum argon yield at specified methane product specification and was determined to 0.3. With allowable product methane concentration below 20 ppm, the steady state product consisted of 25.3% $H_2$, 31.2% Ar and 43.5% $N_2$. The argon yield in primary product was 75 percent. This represents a 7 percentage points yield increase due to the tank equalization steps according to the present invention.

## EXAMPLE 3

Two equalization tanks of 300 ml were tested in a 2-bed pressure swing adsorption system according to the present invention (FIG. 2). Otherwise, the gaseous mixture and PSA beds were the same as employed in comparative Example 1 and Example 2 above. The following cycle sequence was run:

| Step | Bed A | Bed B |
|---|---|---|
| 1 | -----------Bed Pressure Equalization--------- | |
| 2 | Pressurize | Equalize with tank 1 |
| 3 | Pressurize | Equalize with tank 2 |
| 4 | Pressurize and product release | Vent to atmosphere |
| 5 | Constant feed and Product release | Vacuum regeneration |
| 6 | Constant feed and product release | Equalize with tank 2 |
| 7 | Constant feed and product release | Equalize with tank 1 |
| 8 | ______Bed pressure equalization_____ | |
| 9 | Equalize with tank 1 | Pressurize |
| 10 | Equalize with tank 2 | Pressurize |
| 11 | Vent to atmosphere | Pressurize and product release |
| 12 | Vacuum regeneration | Constant feed and product release |
| 13 | Equalize with tank 2 | Constant feed and product release |
| 14 | Equalize with tank 1 | Constant feed and product release |

The timing and valve positions are shown in FIG.6. Inclusion of two tanks of equal volume (300 ml) in the 2-bed pressure swing adsorption process increased argon yield from 68 to 78 percent.

The contents of the tank, after the higher pressure equalization, was analyzed for a number of experiments. The composition was in the range 0-3% $H_2$; 13-16% Ar, 81-87% $N_2$ and very low ppm level $CH_4$. This indicates that void gas losses are important and the modification employing a tank is advantageous.

In the above described processes employing an equalization tank, each regenerating bed is equalized twice with the tank. In the first equalization, just after bed balance, part of the void gases in the bed is transferred to the tank. During the second equalization, after complete regeneration of the bed, the tank is at a higher pressure and hence the conserved gases are now returned. Since void gas loss is thus minimized, the product yield is increased. We next turn to an analysis of the relationship of tank volume to the product yield.

The tank volume is an important variable affecting the amount of gas that is transferred and conserved. The improvement due to the inclusion of an equalization tank according to the present invention, can be related to two quantities: first, the higher tank equalization pressure which is the final pressure from which the bed is vented, and second, the product of the tank volume and the difference between the two tank equalization pressures. The variables are defined as follows:

$P_B$ = the bed balance pressure for the 2-bed process
$P_{vac}$ = the final regeneration pressure
$V_b$ = the total bed volume
E = the porosity
$V_p$ = $V_b$xE, the bed void volume
$V_1$ = the tank volume
$V_R$ = ${}^{V}1/{}^{V}pm$ the ratio of tank volume to bed void volume

$p_H$ = the higher tank equalization pressure
$p_L$ = the lower tank equalization pressure
$Y_{HAr}$ = Argon concentration of high pressure tank gas
$Y_{LAr}$ = Argon concentration of low pressure tank gas
K = proportionality factor

For a given volume of the tank $V_1$, at the higher pressure equalization, a bed at $P_B$ is equalized with a tank at $P_L$. Assuming that the temperature over the bed and the tank are the same,

$$P_H = \frac{P_B V_p + p_L V_1}{(V_p + V_1)} \quad (1)$$

At the lower end equalization, a bed at $p_{vac}$ is equalized with a tank at $p_H$.

$$p_L = \frac{p_{vac} V_p + p_H V_1}{(V_p + V_1)} \quad (2)$$

Solving equations 1 and 2 for $p_H$, we obtain the following:

$$p_H = \frac{p_B V_p(V_p + V_1) + p_{vac} V_p V_1}{(V_T^2 - V_1^2)} \quad (3)$$

With $p_H$ known from equation (3), $p_L$ can be determined from equation (2).

The higher tank equalization pressure (pressure from which the bed vents) $p_H$ decreases with $V_1$, and $p_L$ increases with $V_1$. A larger tank volume increases the argon yield by reducing $p_H$, but ultimately when $p_H$ approaches $p_L$, there is no incremental gain in argon yield. The gain in argon yield is proportional to ($p_H y_{HAr}$-$p_L Y_{LAr}$) $V_1$ or ($p_H$-$p_L$) $V_1$, assuming $^y$HAr = $^y$LAr. The yield gain can be defined as follows:

$$\text{Yield Gain} = K\,(p_H - p_L)V_1 \quad (4)$$

The proportionality factor can be determined by experimentally determining the gain at a particular $V_1$.

## EXAMPLE 4

This example illustrates how the dependence of product yield on tank volume can be determined for a given system. The same gaseous mixture and PSA beds were employed as in Example 2 above, and the same cycle sequence described in Example 2 was followed. A $p_B$ of 0.57 MPa (82.35 psia) and a $p_{Vac}$ of 10 kPa (1.5 psia) was measured. The proportionality factor was determined by setting the experimentally obtained gain in yield at 7 percentage points in equation (4) above.

Referring to FIG. 7, the gain in argon yield was plotted against the ratio of tank volume to bed void volume, $V_R$. As expected, the gain increases with $V_R$. However, the rate of increase (slope) decreases rapidly after $V_R$ = 2.

The maximum gain in argon yield for this case is about 9 percentage points.

The above analysis can be carried out for a plurality of tanks. For example, for a "2-bed plus 2-tank" process using equalizations with 2 tanks in sequence, the following analysis can be made. The variables are defined as follows:

$p_{H1}$, $p_{L1}$= the upper and lower equalization pressures for the 1st tank
$p_{H2}$, $p_{L2}$= the upper and lower equalization pressures for the 2nd tank
$V_1$ and $V_2$= the tank volumes

The equations for the pressure equalizations at constant system temperature are as follows:

I. First tank

Higher end:

$$p_{H1} = \frac{p_B V_p + p_{L1} V_1}{(V_p + V_1)} \quad (4)$$

Lower end

$$p_{L1} = \frac{p_{L2} V_p + p_{H1} V_1}{(V_p + V_1)} \quad (5)$$

II. Second tank

Higher end:

$$p_{H2} \frac{p_{H1} V_p + p_{L2} V_2}{(v_p + V_2)} \quad (6)$$

Lower end

$$p_{L2} = \frac{p_{vac} V_p + p_{H2} V_2}{(V_p + V_2)} \quad (7)$$

The equations (4) through (7) are expressed in matrix form as:

$$\begin{bmatrix} (V_p+V_1) & 0 & -V_1 & 0 \\ -V_p & (V_p+V_2) & 0 & -V_2 \\ -V_1 & 0 & (V_p+V_1) & -V_p \\ 0 & -V_2 & 0 & (V_p+V_2) \end{bmatrix} \begin{bmatrix} p_{H1} \\ p_{H2} \\ p_{L1} \\ p_{L2} \end{bmatrix} = \begin{bmatrix} p_B V_p \\ 0 \\ 0 \\ p_{vac} V_p \end{bmatrix}$$

The linear system of equations given above are solved for $p_{H1}$ $p_{H2}$, $p_{L1}$ and $p_{L2}$. Assuming that the argon concentration in the two tanks at the end of both the high pressure and low pressure equalization are equal, the gain in argon yield for the two tank embodiment is proportional to $[(P_{H1} - P_{L1})V_1 + (P_{H2} - P_{L2})V_2]$. Further choosing both tank volumes to be equal, ($V_1$=$V_2$): Gain in argon yield = $K[(P_{H1}-P_{L1}) + (P_{H2}-P_{L2})]V_1$. Assuming that the argon concentration in the tank for the single tank and two tank embodiments are not significantly different (typically, this has been found to be the case because nitrogen is the major components of the tank gas), the same proportionality constant, experimentally determined for the single tank case, can be used again. FIG. 8 shows the gain in argon yield plotted against the ratio of tank volume to bed void volume. In this case, a maximum argon yield of 13 percent over the conventional 2-bed process is obtained. This compares to a 9 percent gain in the single tank embodiment. With the use of equalization tanks, it is thus possible to increase argon yield from 68 percent for a 2-bed process to 77 percent with a single tank and to 81 percent with two tanks. A greater number of tanks is possible. However, the increase in capital costs will eventually outweigh the marginal increase in yield gain from another tank.

EXAMPLE 5

This example illustrates the use of the equalization tank as a mechanism to preserve available feed pressure energy so that the primary product can be produced at high pressure, thereby avoid recompression for downstream processing while maintaining yield. The conventional 2-bed system of comparative example 1 is used again but at a 2.85 MPa (400 psig) pressure instead of 1.1 MPa (150 psig). An argon yield of 62 percent results as compared to 68 percent at 1.1 MPa (150 psig). For the conventional 2-bed process, there is a 6 percent drop in yields as the pressure is raised from 1.1 MPa (150 psig) to 2.85 MPa (400 psig) and this is attributed to higher bed void gas loss. Now the theoretical analysis carried out for the single tank embodiment of the present invention is repeated with $P_B$ = 1.4 MPa (207.35 psia). Using the proportionality factor determined earlier, the variation of gain in argon yield with ratio of tank volume to bed void volume is calculated and plotted in FIG. 9. At 2.85 MPa (400 psig) operating pressure, an argon yield increase of 22 percentage points is possible. Hence, by including the tank equalization step, the yield at the higher pressure can at least be maintained at the same yield as the low pressure PSA operation or even increased.

The above described embodiments are illustrative, but not limitative of the present invention for using tank pressure equalization to improve product yield. Modifications or variations, within the scope and spirit of the invention, may be apparent to those skilled in the art.

**Claims**

1. A cyclical process for the separation of a multicomponent gaseous mixture comprising a strongly adsorbed component, a moderately adsorbed component and a mildly adsorbed component, using an apparatus for separating the gas mixture by pressure swing adsorption including first and second adsorbent beds, each having a feed gas end and opposed primary product gas end, and at least one tank able to be placed in communication with both beds separately, the process comprising in sequence:

(i) placing the first bed in communication with the second bed so as to equalise the pressures therein;

(ii) placing the first bed in communication through its primary product end with said tank so as to equalise the pressures therein;

(iii) regenerating said at least first adsorption bed;

(iv) placing said first adsorption bed in communication again with said tank so as to equalise the pressures therein and to return gas to said first bed;

(v) placing said first bed in communication with said second bed so as to equalise the pressures therein;

(vi) placing said second adsorption bed in communication through its primary product end with said tank so as to equalise the pressures therein;

(vii) regenerating said second adsorption bed;

(viii) placing said second adsorption bed in communication with said tank and equalising the pressures therein and returning gas from the tank to the second bed;

in which sequence while one bed is being equalised in pressure with said at least one tank or is being regenerated, the other bed is being pressurised with feed gas mixture, during which step primary product gas stream, rich in the mildly adsorbed component and also containing the moderately adsorbed component is produced at relatively high pressure, and in which sequence a secondary product gas stream, rich in the strongly adsorbed component and also containing the moderately adsorbed component, is produced during the regeneration steps at relatively low pressure, wherein each step of pressure equalisation between the first and second beds is performed by placing them in communication at both their feed gas and their primary product gas ends, the beds being isolated from the feed gas and the product gas throughout each such pressure equalisation.

2. A process according to claim 1, wherein said multicomponent gaseous mixture comprises hydrogen, argon, nitrogen, and methane and wherein said argon is said mildly adsorbed component, methane is said strongly adsorbed component, and nitrogen is said moderately adsorbed component.

3. A process according to claim 1 or claim 2, in which these are two tanks, and steps (ii) and (vi) comprise placing the respective bed in communication through its primary product gas end with first one tank and then the other tank.

4. A process according to any one of the preceding claims, wherein regeneration of said two bed pressure swing adsorption system is carried out by applying a vacuum or through the use of purge gas available from external source at slightly above atmospheric pressure.

5. A process according to any one of the preceding claims wherein during each cycle each bed is backfilled with product gas.

## Patentansprüche

1. Zyklisches Verfahren zum Trennen eines Mehrkomponentengasgemisches mit einer Komponente, die stark adsorbiert wird, mit einer Komponente, die mäßig adsorbiert wird und mit einer Komponente, die schwach adsorbiert wird, bei dem eine Vorrichtung zum Trennen des Gasgemisches durch Druckschwankungsadsorption benutzt wird, die erste und zweite Adsorptionsbetten, von denen jedes ein Zuführgasende und ein gegenüberliegendes Primärproduktgasende hat, und wenigstens einen Tank aufweist, der mit beiden Betten einzeln verbindbar ist, das Verfahren umfaßt in Folge:

(i) Verbinden des ersten Betts mit dem zweiten bett, um die Drücke darin auszugleichen,

(ii) Verbinden des ersten Betts durch sein Primärproduktgasende mit dem Tank, um die Drücke darin auszugleichen,

(iii) Auffrischen wenigstens des ersten Adsorptionsbetts,

(iv) wiederverbinden des ersten Adsorptionsbetts mit dem Tank, um die Drücke darin auszugleichen und um Gas in das erste Bett zurückzubringen,

(v) verbinden des ersten Betts mit dem zweiten Bett, um die Drücke darin auszugleichen,

(vi) verbinden des zweiten Adsorptionsbetts durch sein Primärproduktgasende mit dem Tank, um die Drücke darin auszugleichen,

(vii) Auffrischen des zweiten Adsorptionsbetts,

(viii) verbinden des zweiten Adsorptionsbetts mit dem Tank, Ausgleichen der Drücke darin und Zurückführen von Gas aus dem Tank in das zweite Adsorptionsbett,

wobei in der Folge, während das eine Bett bezüglich des Druckes mit dem wenigstens einen Tank ausgeglichen wird oder aufgefrischt wird, das andere Bett mit Zuführgasgemisch unter Druck gesetzt wird, wobei während des Schritts ein Primärproduktgasstrom, der reiche an der schwach adsorbierbaren Komponente ist und auch die mäßig adsorbierbare Komponente enthält, bei relativ hohem Druck erzeugt ist, und wobei in der Folge ein Sekundärproduktgasstrom, der reich an der stark adsorbierbaren Komponente ist und auch die mäßig adsorbierbare Komponente enthält, während des Auffrischungsschritts bei relativ niedrigem Druck erzeugt wird, wobei jeder Druckausgleichsschritt zwischen den ersten und zweiten Betten ausgeführt wird durch Verbinden der Betten sowohl an ihren Zuführgas- und Primärproduktgasenden, dabi sind die Betten während jedes gesamten derartigen Druckausgleichs von dem Zuführgas und dem Produktgas getrennt.

2. Verfahren nach Anspruch 1, wobei das Mehrkomponentengasgemisch Wasserstoff, Argon, Stickstoff und Methan enthält und wobei Argon die schwach adsorbierbare Komponente, Methan die stark adsorbierbare Komponente und Stickstoff die mäßig adsorbierbare Komponente ist.

3. Verfahren nach Anspruch 1 oder 2, bei dem zwei Tanks verwendet werden und die Schritte (ii) und (vi) das Verbinden der entsprechenden Betten durch ihre Primärproduktgasenden erst mit dem einen Tank und

dann mit dem anderen Tank umfassen.

4. Verfahren nach einem der vorhergehenden Ansprüche, wobei das Auffrischen der Zweibett-Druckschwankungsadsorptionsvorrichtung mittels Anlegen eines Vakuums oder durch Verwendung eines Reinigungsgases aus einer externen Quelle, deren Druck geringfügig über Atmosphärendruck liegt, durchgeführt wird.

5. Verfahren nach einem der vorhergehenden Ansprüche, wobei während jedes Zyklus jedes Bett mit Produktgas rückgefüllt wird.

## Revendications

1. Procédé cyclique de séparation des constituants d'un mélange gazeux à plusieurs constituants, comprenant un constituant fortement adsorbé, un constituant modérément adsorbé et un constituant faiblement adsorbé, en utilisant un appareil pour séparer les constituants du mélange gazeux par adsorption avec variation cyclique de la pression, cet appareil comprenant des premier et second lits adsorbants, chacun comportant une extrémité pour le gaz d'alimentation et une extrémité opposée pour le produit gazeux primaire, et au moins un réservoir pouvant être mis en communication séparément avec les deux lits, le procédé comprenant, en une séquence :

(i) le placement du premier lit en communication avec le second lit, de façon à provoquer l'égalisation des pressions qui y règnent ;

(ii) le placement du premier lit en communication, par son extrémité de produit primaire, avec ledit réservoir de façon à provoquer l'égalisation des pressions régnant dans ce lit et dans ce réservoir ;

(iii) la régénération d'au moins le premier lit d'adsorption ;

(iv) le placement dudit premier lit d'adsorption en communication à nouveau avec ledit réservoir de façon à provoquer l'égalisation des pressions régnant dans le lit et dans le réservoir et afin de faire revenir le gaz vers ledit premier lit;

(v) le placement dudit premier lit en communication avec ledit second lit de façon à provoquer l'égalisation des pressions qui y règnet ;

(vi) le placement dudit second lit d'adsorption en communication, par son extrémité de produit primaire, avec ledit réservoir de façon à provoquer l'égalisation des pressions régnant dans le lit et dans le réservoir ;

(vii) la régénération dudit second lit d'adsorption ;

(viii) le placement dudit second lit d'adsorption en communication avec ledit réservoir et l'égalisation des pressions régnant dans le lit et dans le réservoir, et le retour du gaz, du réservoir dans le second lit ;

séquence dans laquelle, pendant qu'un lit est soumis à égalisation de sa pression aved ledit au moins un réservoir ou est soumis à régénération, l'autre lit est soumit à pressurisation par du mélange gazeux d'alimentation, étape au cours de laquelle le courant de gaz de produit primaire, riche en le constituant peu adsorbé et contenant également le constituant modérément adsorbé, est produit à une pression relativement élevée, et séquence dans laquelle un courant gazeux de produit secondaire, riche en le constituant fortement adsorbé et contenant également le constituant modérément adsorbé, est produit au cours des étapes de régénération à pression relativement faible, chaque étape d'égalisation de pression entre les premier et second lits étant réalisée par placement de ces lits en communication, par leurs extrémités de gaz d'alimentation et leurs extrémités de gaz constituant un produit primaire, les lits étant isolés, pendant chacune de ces égalisations de pression, du gaz d'alimentation et du gaz produit.

2. Procédé selon la revendication 1, dans lequel le mélange gazeux à plusieurs constituants comprend de l'hydrogène, de l'argon, de l'azote et du méthane, et dans lequel ledit argon constitue le constituant faiblement adsorbé, le méthane constitue le constituant fortement adsorbé et l'arote constitue le constituant modérément adsorbé.

3. Procédé selon la revendication 1 ou la revendication 2, dans lequel il y a deux réservoirs, et les étapes (ii) et (vi) comprenant le placement du lit respectif en communication, par son extrémité de gaz comme produit primaire, avec un premier réservoir puis avec l'autre réservoir.

4. Procédé selon l'une quelconque des revendications précédents, dans lequel on effectue la régénération dudit système d'adsorption avec variation cyclique de pression dans deux lits, en appliquant une dépression ou en utilisant un gaz de purge, disponible en provenance d'une source externe à une pression légèrement supérieure à la pression atmosphérique.

5. Procédé selon l'une quelconque des revendications précédentes, dans lequel, au cours de chaque cycle, chaque lit est rechargé ou empli à nouveau de gaz constituant un produit.

FIG. 1

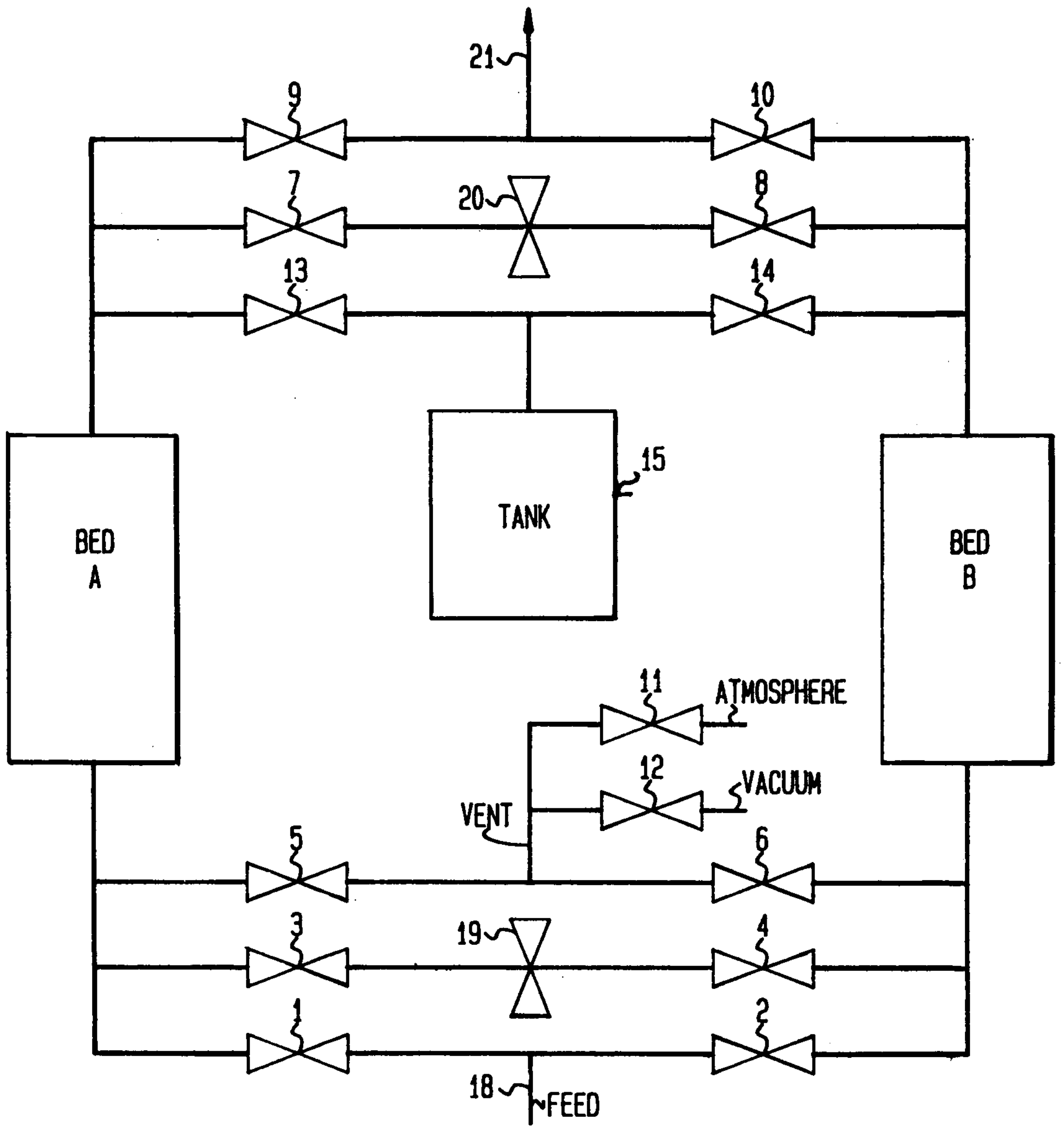
21
9
10
7
20
8
13
14
TANK
15
BED
A
BED
B
11
ATMOSPHERE
12
VACUUM
VENT
5
6
3
19
4
1
2
18
FEED

FIG. 2

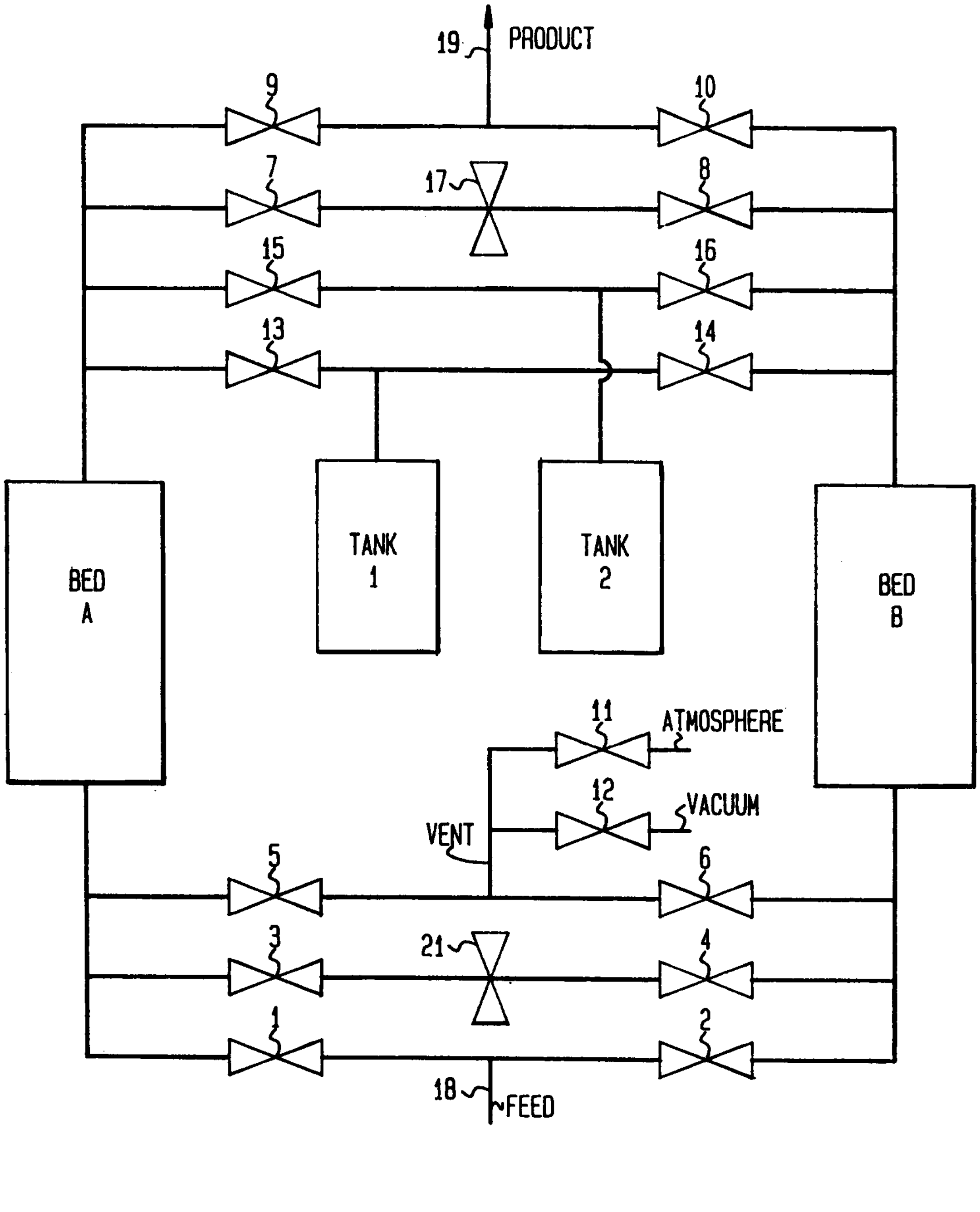
19
PRODUCT
9
10
7
17
8
15
16
13
14
BED
A
TANK
1
TANK
2
BED
B
11
ATMOSPHERE
12
VACUUM
VENT
5
6
3
21
4
1
2
18
FEED

FIG. 3

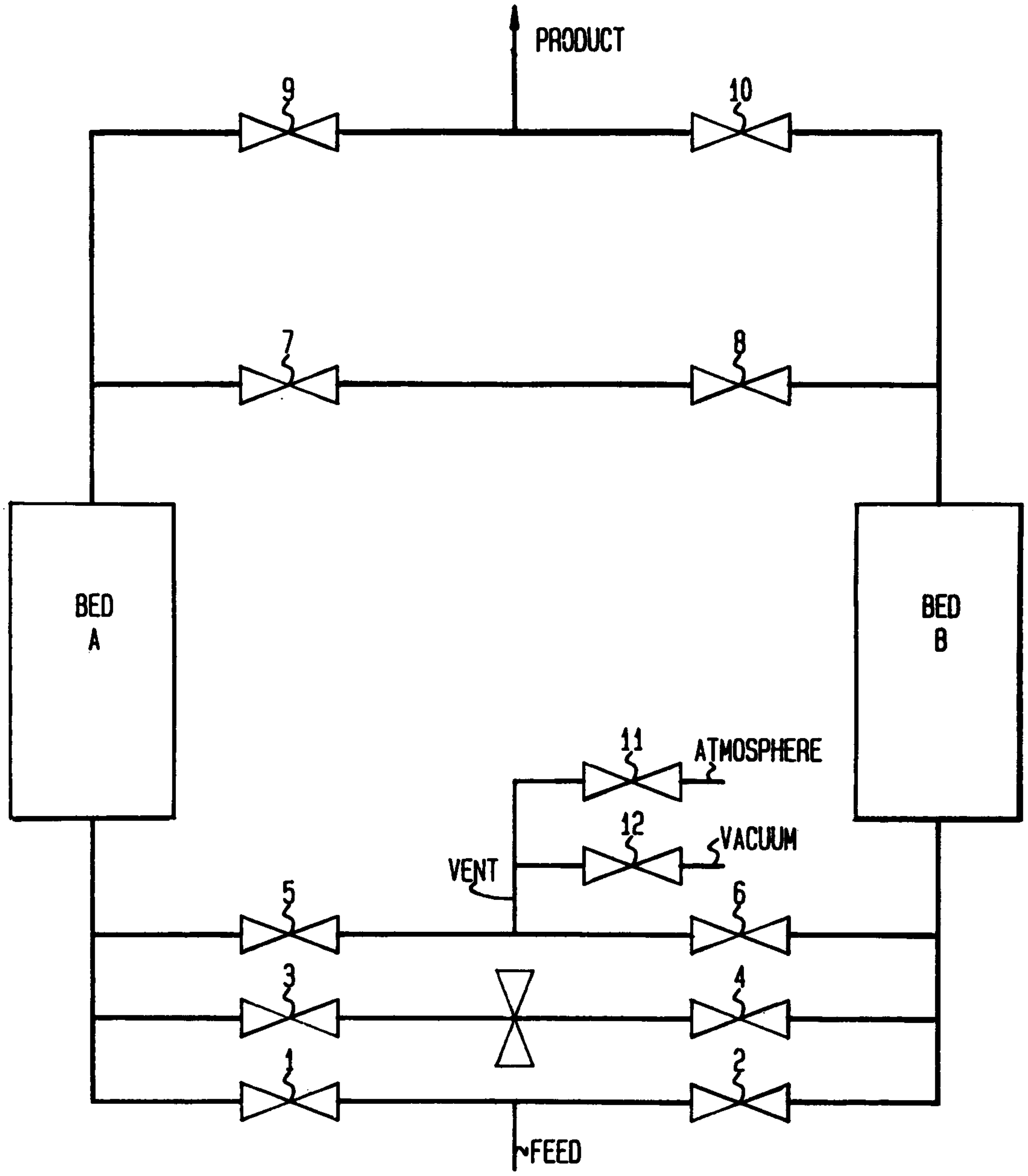
PRODUCT
9
10
7
8
BED
A
BED
B
11
ATMOSPHERE
12
VACUUM
VENT
5
6
3
4
1
2
FEED

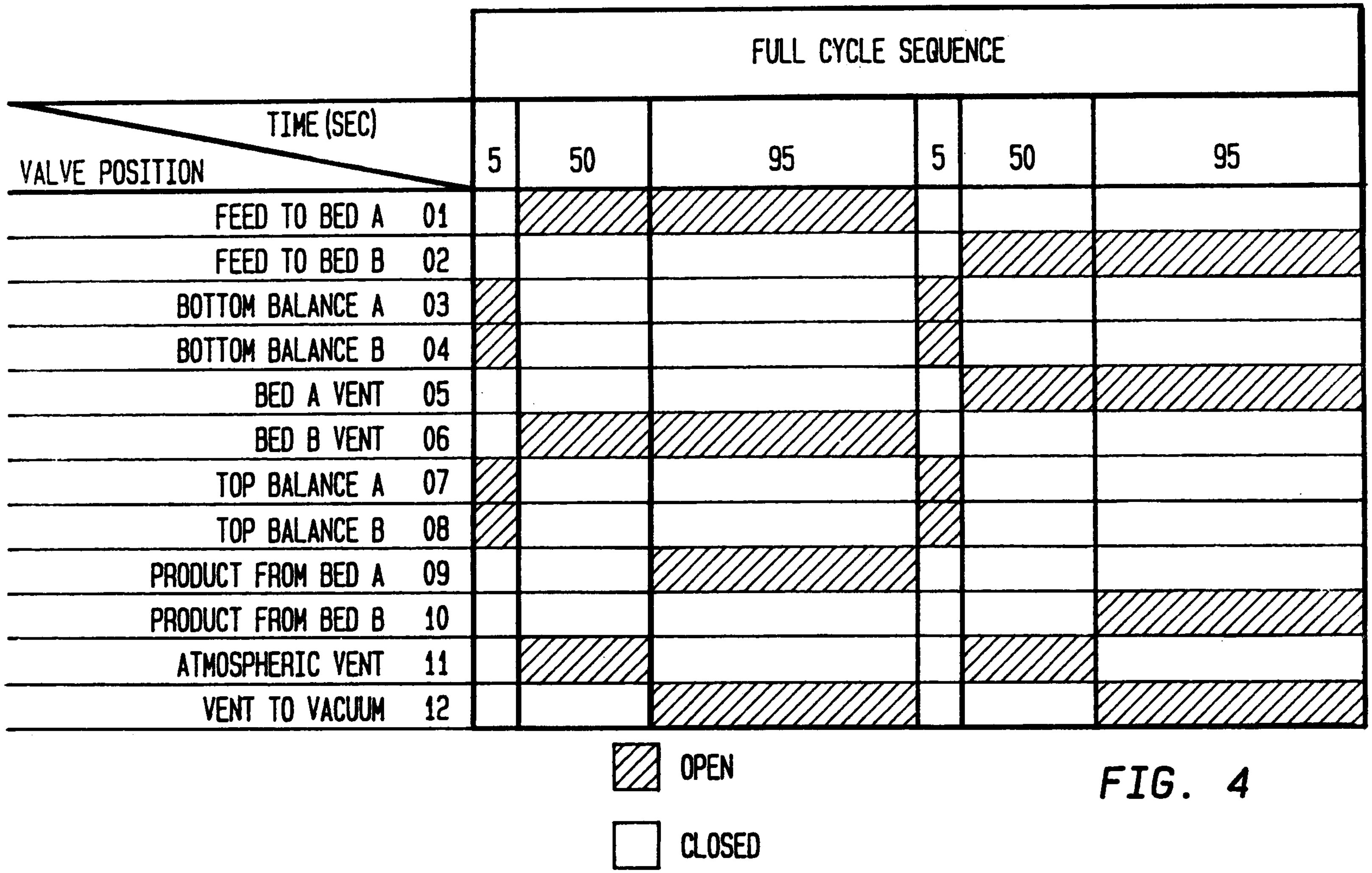
FULL CYCLE SEQUENCE
TIME (SEC)
VALVE POSITION
5
50
95
5
50
95
FEED TO BED A 01
FEED TO BED B 02
BOTTOM BALANCE A 03
BOTTOM BALANCE B 04
BED A VENT 05
BED B VENT 06
TOP BALANCE A 07
TOP BALANCE B 08
PRODUCT FROM BED A 09
PRODUCT FROM BED B 10
ATMOSPHERIC VENT 11
VENT TO VACUUM 12
OPEN
CLOSED

FIG. 4

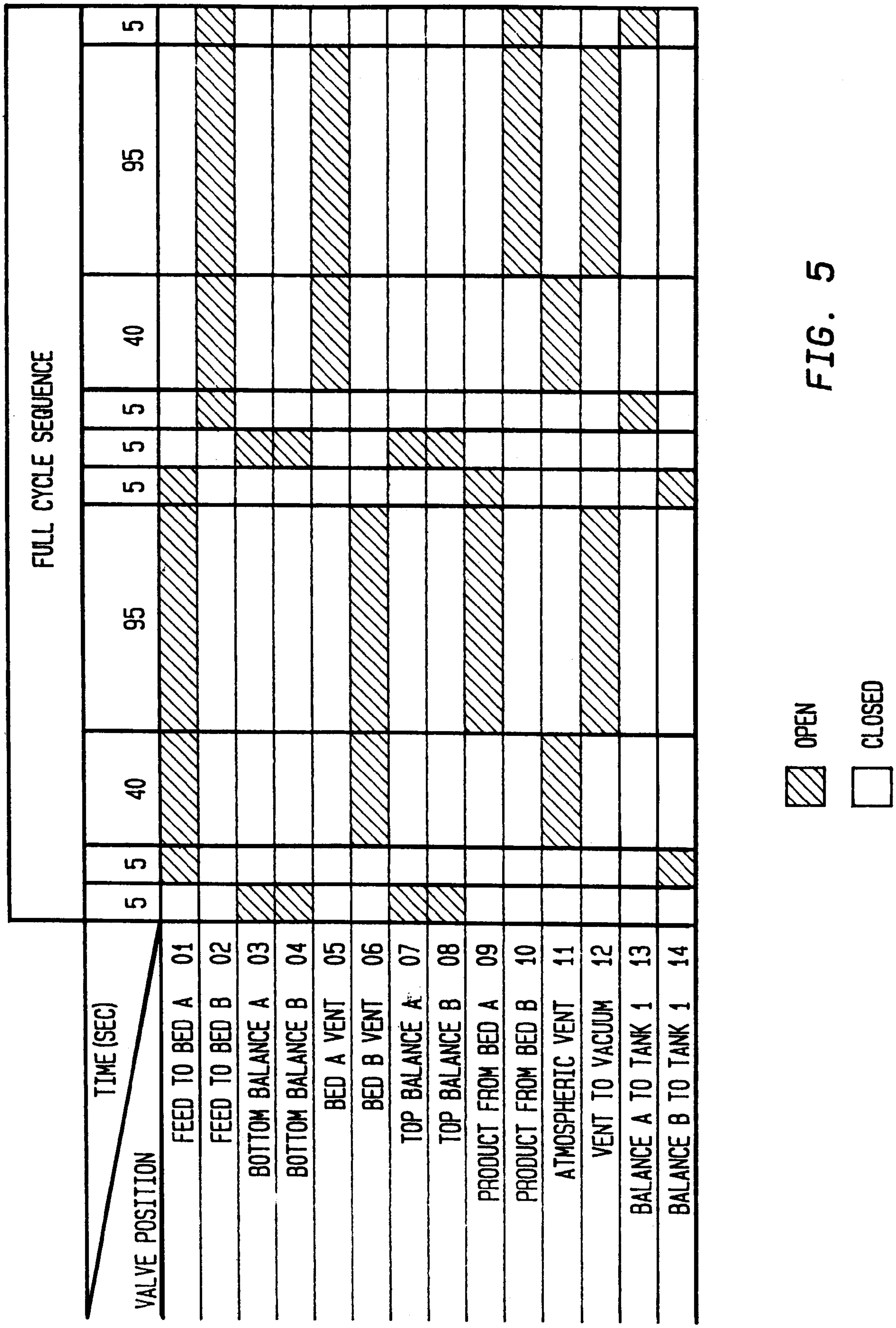
FULL CYCLE SEQUENCE
TIME (SEC)
VALVE POSITION
5
5
40
95
5
5
5
40
95
5
FEED TO BED A 01
FEED TO BED B 02
BOTTOM BALANCE A 03
BOTTOM BALANCE B 04
BED A VENT 05
BED B VENT 06
TOP BALANCE A 07
TOP BALANCE B 08
PRODUCT FROM BED A 09
PRODUCT FROM BED B 10
ATMOSPHERIC VENT 11
VENT TO VACUUM 12
BALANCE A TO TANK 1 13
BALANCE B TO TANK 1 14
OPEN
CLOSED

FIG. 5

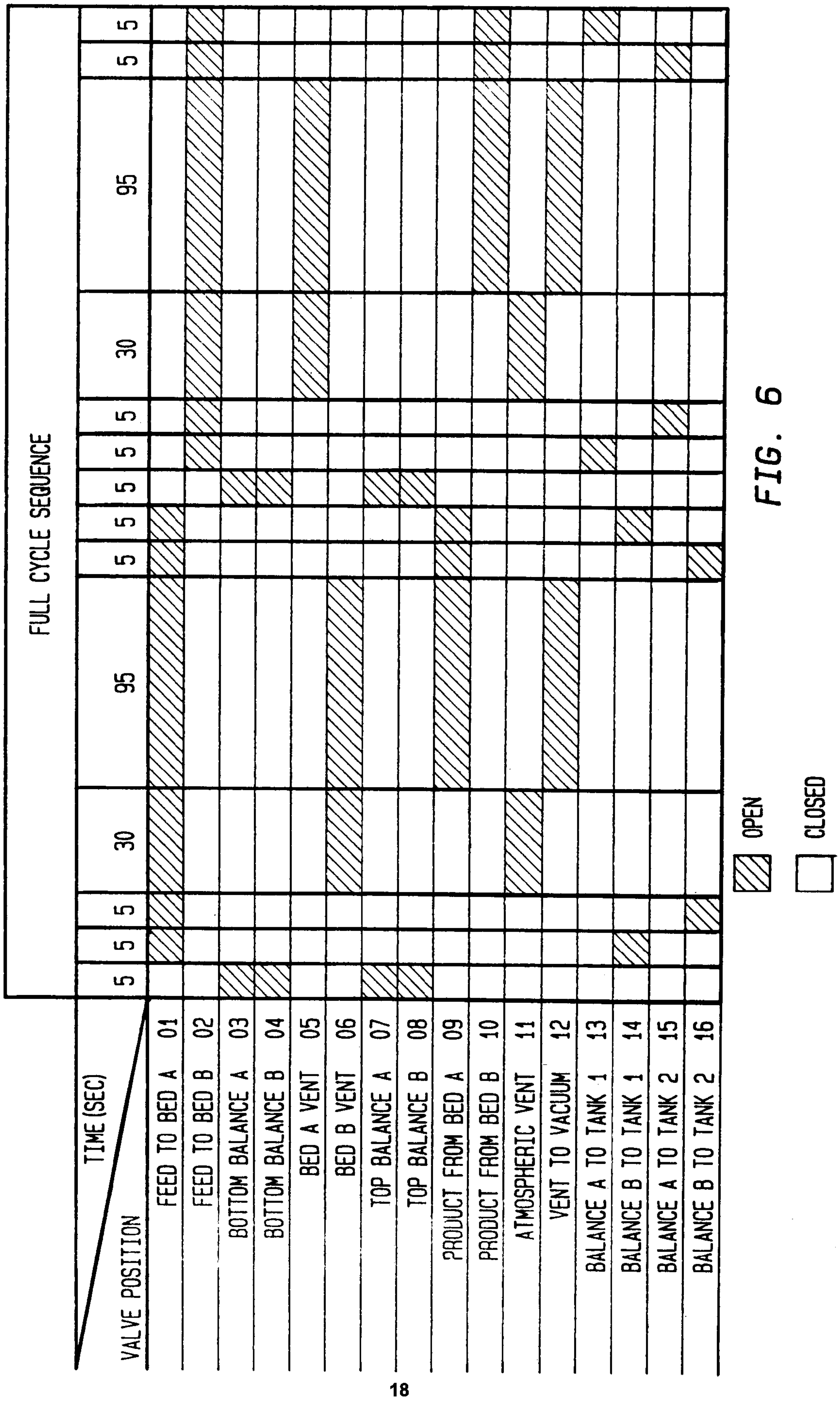
FULL CYCLE SEQUENCE
TIME (SEC)
VALVE POSITION
5
5
5
30
95
5
5
5
5
5
30
95
5
5
FEED TO BED A 01
FEED TO BED B 02
BOTTOM BALANCE A 03
BOTTOM BALANCE B 04
BED A VENT 05
BED B VENT 06
TOP BALANCE A 07
TOP BALANCE B 08
PRODUCT FROM BED A 09
PRODUCT FROM BED B 10
ATMOSPHERIC VENT 11
VENT TO VACUUM 12
BALANCE A TO TANK 1 13
BALANCE B TO TANK 1 14
BALANCE A TO TANK 2 15
BALANCE B TO TANK 2 16
OPEN
CLOSED

FIG. 6

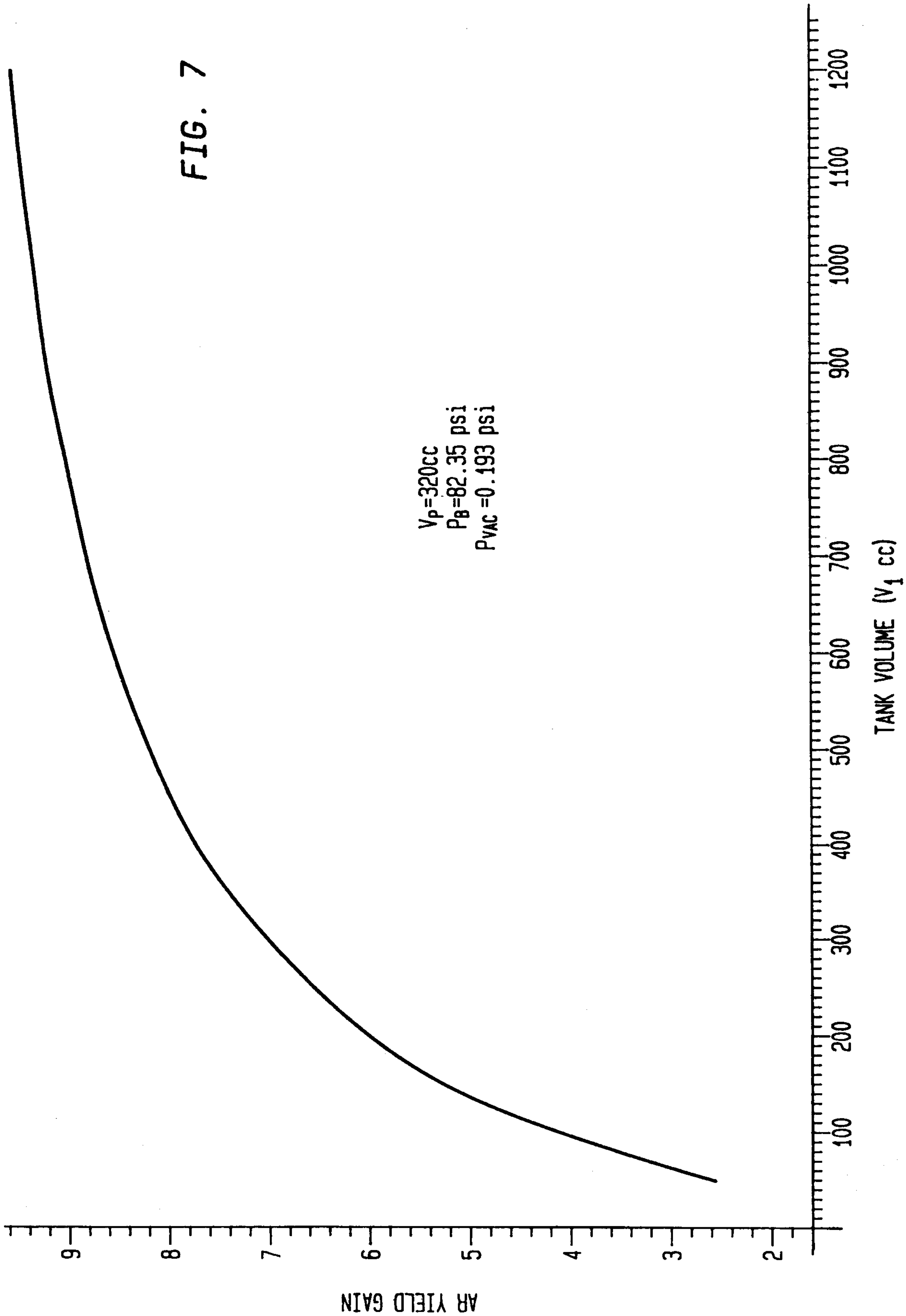
$V_P$=320cc
$P_B$=82.35 psi
$P_{VAC}$=0.193 psi
TANK VOLUME ($V_1$ cc)
AR YIELD GAIN
100
200
300
400
500
600
700
800
900
1000
1100
1200
2
3
4
5
6
7
8
9

FIG. 7

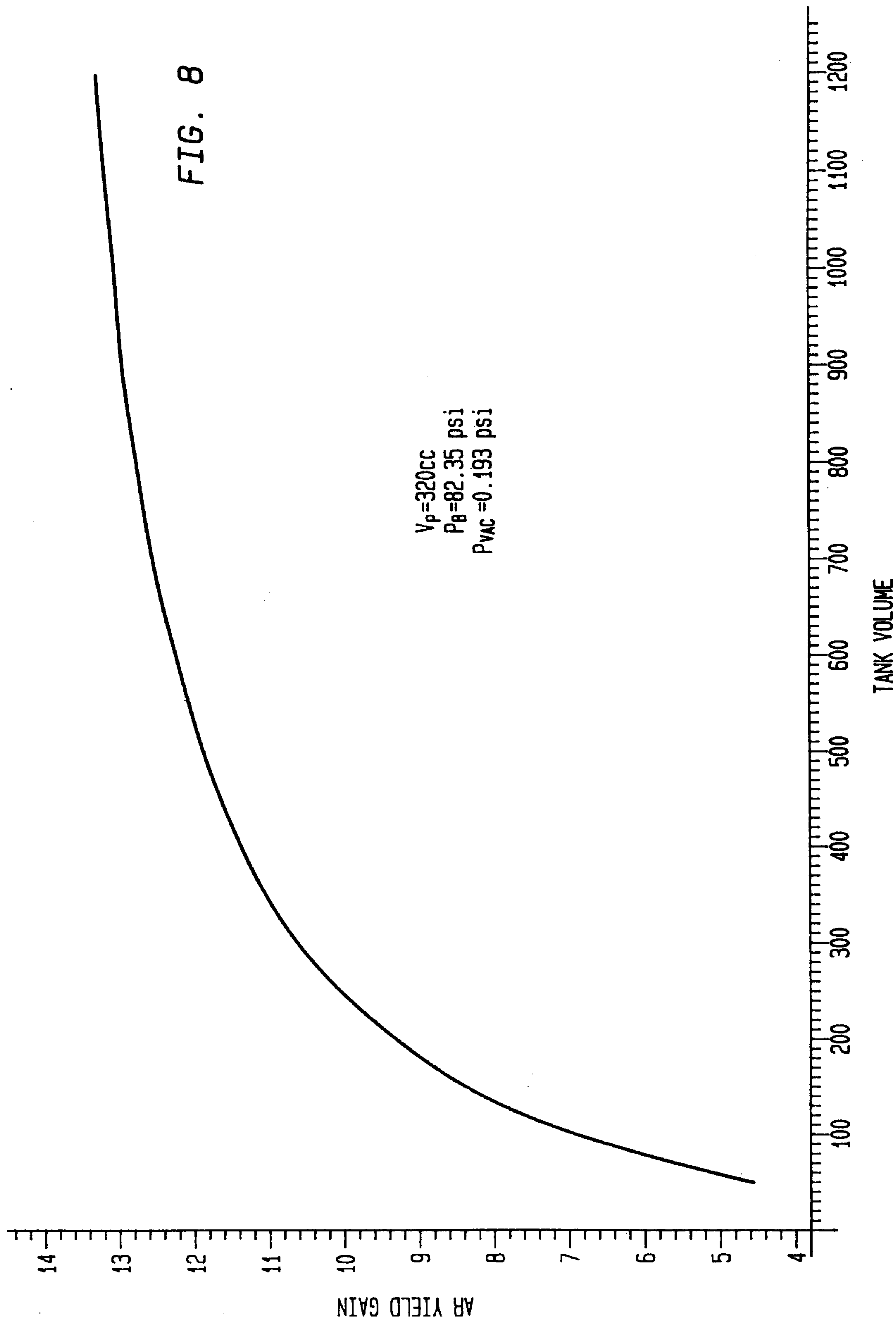
AR YIELD GAIN
TANK VOLUME
$V_P$=320cc
$P_B$=82.35 psi
$P_{VAC}$ =0.193 psi
4
5
6
7
8
9
10
11
12
13
14
100
200
300
400
500
600
700
800
900
1000
1100
1200

FIG. 8

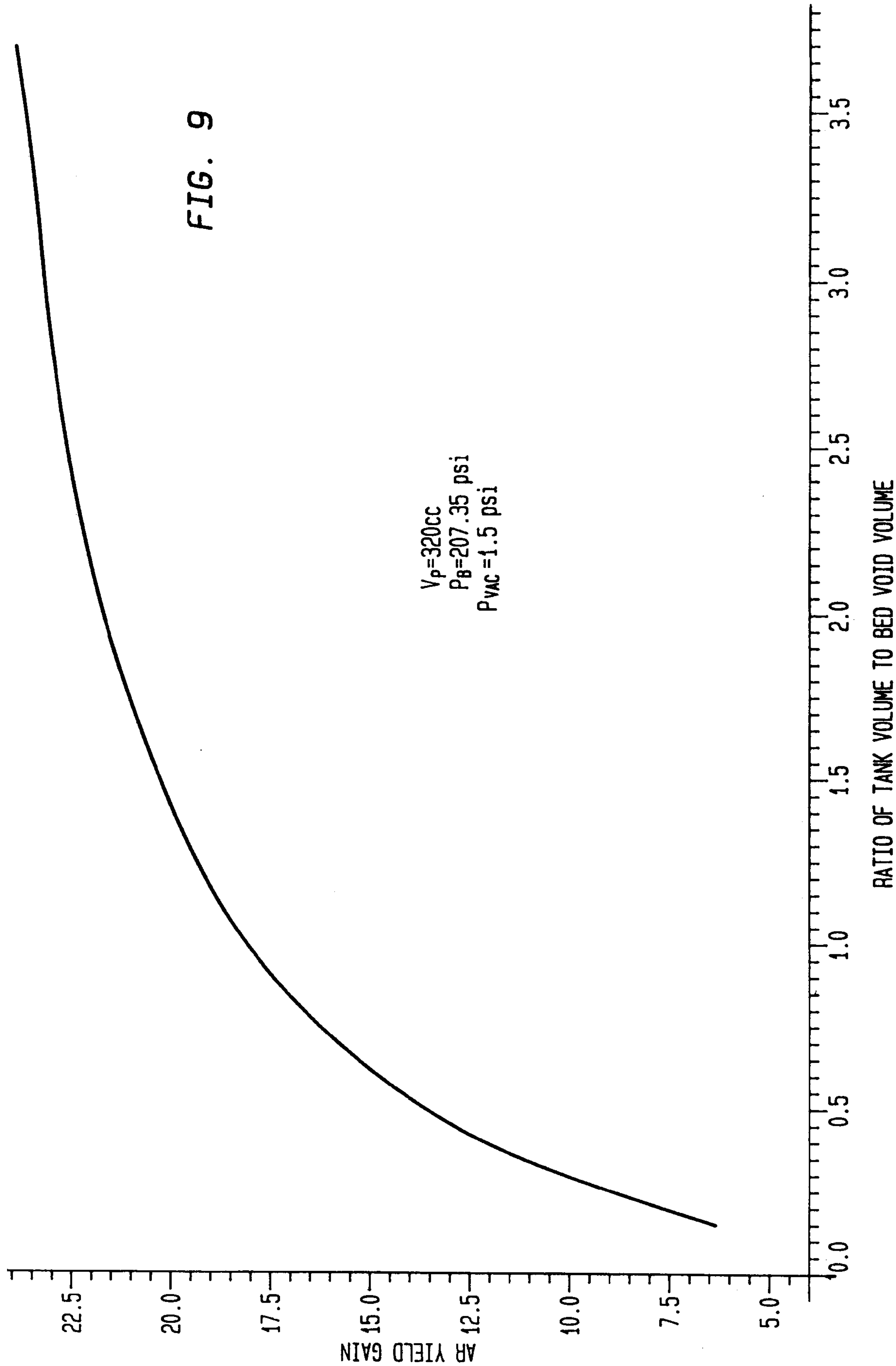

$V_P$=320cc
$P_B$=207.35 psi
$P_{VAC}$=1.5 psi
RATIO OF TANK VOLUME TO BED VOID VOLUME
AR YIELD GAIN
0.0
0.5
1.0
1.5
2.0
2.5
3.0
3.5
5.0
7.5
10.0
12.5
15.0
17.5
20.0
22.5


FIG. 9